Europäisches Patentamt

European Patent Office

Office européen des brevets

(11) Publication number: **0 429 718 A1**

## (12) EUROPEAN PATENT APPLICATION

(21) Application number: 89122215.0

(22) Date of filing: 01.12.89

(51) Int. Cl.5: **H02K 7/065**, H02H 9/04

(43) Date of publication of application:
**05.06.91 Bulletin 91/23**

(84) Designated Contracting States:
**DE FR GB IT Bulletin 00/1**

(71) Applicant: **Van der Geenst, Bernard**
**Theresienstrasse 30**
**W-8055 Hallbergmoos(DE)**

(72) Inventor: **Van der Geenst, Bernard**
**Theresienstrasse 30**
**W-8055 Hallbergmoos(DE)**

(54) **Electro-motor.**

(57) An electromagnetic motor, converting a mag-
neticaly induce rectilinear movement into a continu-
ous circular mechanical energy.

An electro motor of contactors type, whose coil
(3), mounted in a fix contactor (1) attract when
enrgize a mobil contactor (4) itself fixed on a carrier
(5) whose action on a rod (6) transform a magnetic
energy into a mechanical energy by turning a crank-
shaft (7). A spring or set of springs (2) directed by a
guide or guides (2A) will help the mobil contactor
during its descent.

Fig. 1

EP 0 429 718 A1

## ELECTROMAGNETIC MOTOR

The invention relates to electro motors of contactors type and reciprocating plural elements.

Transformation of an electromagnetic energy into mechanical energy, through a set of contactors of specific construction activating alternatly a set of contactors-pistons also of specific construction and material, which in turn activate a rotating crankshaft.

Most electric motors with reciprocating systems had the major deffects of friction losses, through the use of solenoides, conventional pistons liners and the need of much electrical power for the running of the motor, due to large air gaps between contactors, through which most of the magnetic field looses its strength.

The invention as claimed is intended to remedy this draw back, it solves the problem of the air gap and weak magnetic field between contactors and bring the magnetic field to its maximum value in a permanent linear lifting force and at the same time eliminate friction between the fix and the mobil contactors, the advantage of this invention, is a reasonable size contactor, with a much greater lifting power, a lower current need, the magnetic field being much more powerfull, therefore eliminating exesive heat and energy losses.

One way of carrying out the invention is described in detail below with reference to drawings which illustrate only one specific embodiment, in which:

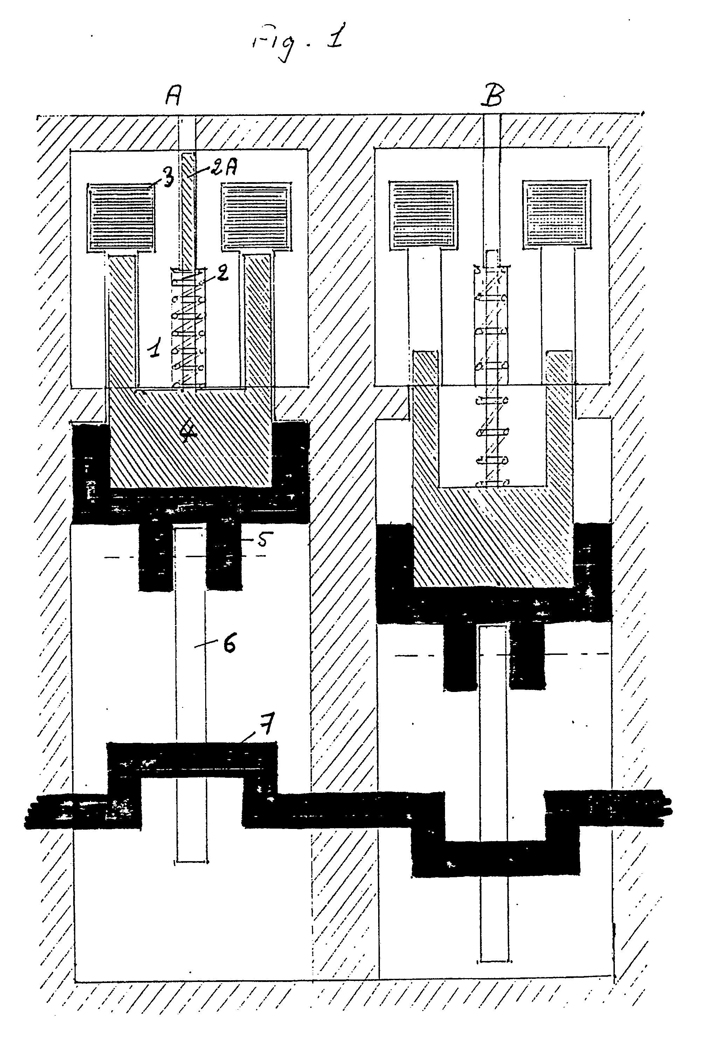

fig.1 is a side view of a motor with only 2 of its pistons-contactors, in order to show their positions.

The unit A is at its upper end course position, and shows in (1) the fix contactor, (2) a spring, (3) the coil (electric winding), (4) the mobil contactor, to ensure linearity of the movement, the fix contactor (1) is blocked in position in a chamber, whose inner dimensions are corresponding to the contactor outer dimensions. The mobil contactor is attached to a sliding holder (5) whose holding part is the same size as the mobil contactor holding part, The sliding holder (5) will have as few as possible friction points and will be attached to a rod (6) itself connected to a crankshaft (7).

The contactors can be placed in line, V, or star configuration.

The shape of the contactors can be cylindrical, rectangular or square.

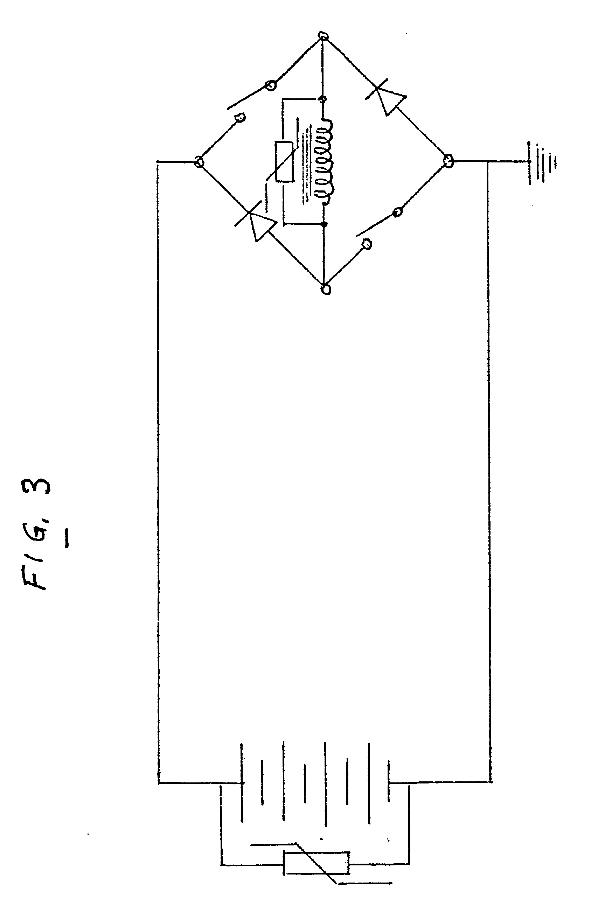

The unit B, shows the contactor in a descent position, the mobil contactor does not have to be inside the fix contactor at the lower end of its course, thus allowing a greater course amplitude, but must be plonged inside the fix contactor at the time of the corresponding coil ignition. A space, as little as possible, will be provided at the top end course, between mobil and fix contactors to prevent noice and mechanical damage. Each coil or group of coils, will be alternatly energized in direct current, through an electronic circuit (fig.3) which is designed to decrease both, the building and dismantling time of the magnetic field, dependant of the coils inductivity, parallele with each coil, will be a varistor of proper size, to absorb the transient voltage at rupture, to reduce capacitative effects and to protect the coils. The battery or batteries will be protected the same way.

The distribution system will be regulated so that the magnetic field is zero at the upper end of the course.

This system will have the advantage to absorb and feed back to the battry, any residual voltage created by counter magnetic field during the descent of the mobil contactor.

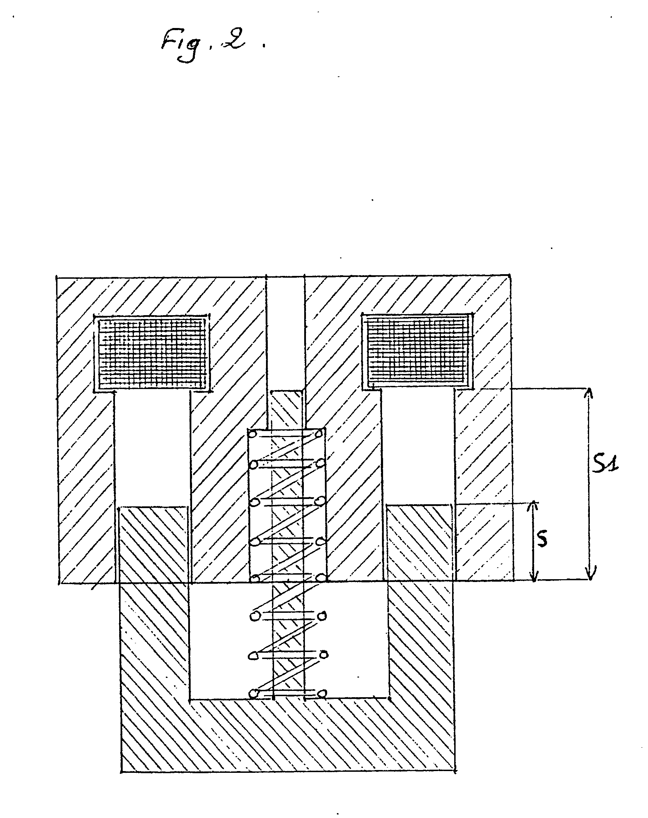

At the time of coil energizing, the mobil contactor will be sufficiently engaged into the fix contactor to ensure a sufficient surface (S. fig.2) since the starting moment is dependant of this surface, the lifting power being dependant of the surface S1 fig. 2.

A spring (2. fig.1), or set of springs, will be installed between the fix and mobil contactors, its repulsive value will be substantialy inferior to the attractive value of the fix contactor when energized, but will be equal or superior to the attractive value of the counter magnetic field created by the fast mouvement of the mobil contactor during its descent, thus limiting its braking effect and allowing a smooth and reasonably high RPM level, a spring guide (2A) will be mounted for each spring.

A lubricating system will be provided.

All rods will be made of a non magnetic material.

All contactors will be made of soft steel, magnetic when in a coil magnetic field and non magnetic when the coil deenergize.

The motor casing will also be made of non magnetic material.

## Claims

An electro-magnetic motor of contactors type and reciprocating plural elements, comprising a contactors system, with specifics characteristics.

A set of fix contactors 1 (fig.1), a set of mobil contactors 4(fig.1), whose shape can be cylindrical, square or rectangular, alternatly energized by a set of coils 3(fig.1), the mobil contactor 4(fig.1) being helped in their descent cycle by a set of springs 2 (fig.1), characterised in that each contactor lifting moment is dependant of the surface S(fig.2) at the time of coil energizing, the lifting power being linear and dependant of the surface S1(fig.2), in this type of contactor, the air gap remain permanently at its minimum, permiting a strong magnetic field and therefore a much higher lifting force, compared to the conventional contactor.

A set of contactors as claimed in claim 1, whose coil or set of coils are energized alternatly by a distribution system as described in fig.3, diminishing the time of building and dismantling of the magnetic field in the said coils, coupled with a crankshaft system, will create an electromotor whose power charasteristics will be very advantageous.

Fig. 1

Fig. 2.

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-516477 (BAULE)<br>* page 1, line 15 - page 2, line 88; figures 1-4. * | 1. | H02K7/065<br>H02H9/04 |
| Y | | 2. | |
| Y | US-A-4305024 (SETSUO KUROKI)<br>* column 4, lines 23 - 39 *<br>* column 6, lines 8 - 28 *<br>* column 7, lines 34 - 51 *<br>* column 8, lines 49 - 61 *<br>* column 9, lines 43 - 58; figures 4, 7, 12, 13, 15 *<br>* figure 17. * | 2. | |
| X | US-A-2056719 (GELNAW)<br>* page 1, left-hand column, line 42 - page 2, right-hand column, line 12; figures 1-6. * | 1. | |
| X | FR-A-1076295 (PHILIPS)<br>* page 2, right-hand column, lines 40 - 51; figure 5. * | 1. | TECHNICAL FIELDS SEARCHED (Int. Cl.5 ) |
| A | DE-A-2824424 (RAAB)<br>* page 10, lines 2 - 8 *<br>* page 10, lines 22 - 33 *<br>* page 11, lines 9 - 14 *<br>* page 11, lines 19 - 30; figures 1, 7-9, 17, 18 *<br>* figures 21-23. * | 1. | H02K<br>H02H |
| A | US-A-4749893 (REYNOLDS)<br>* column 5, lines 35 - 43 *<br>* column 6, lines 18 - 42; figures 1-4. * | 1. | |
| A | US-A-3894274 (ROSENBERRY)<br>* column 5, line 19 - column 6, line 36; figures 1, 2. * | 2. | |

The present search report has been drawn up for all claims

| Place of search | Date of completion of the search | Examiner |
|---|---|---|
| THE HAGUE | 20 JULY 1990 | TIO K.H. |

EPO FORM 1503 03.82 (P0401)